# EUROPÄISCHE PATENTSCHRIFT

(11) **EP 0 515 475 B1**
(45) Veröffentlichungstag und Bekanntmachung des Hinweises auf die Patenterteilung: **13.12.1995**
(21) Anmeldenummer: 91904233.3
(22) Anmeldetag: 15.02.1991
(51) Int. Cl.: G01F 11/00

(54) **DOSIERVORRICHTUNG AN EINEM SCHÜTTGUTBEHÄLTER**
DISPENSER ON A BULK MATERIAL CONTAINER
DISPOSITIF DE DOSAGE PLACE SUR UN RESERVOIR DE MATIERE EN VRAC

(30) Priorität: 16.02.1990 DE 4004818
(43) Veröffentlichungstag der Anmeldung: 02.12.1992
(73) Patentinhaber: FORM ORANGE PRODUKTENTWICKLUNG, 6840 Götzis (AT)
(72) Erfinder: HELD, Wolfgang, A-6971 Hard (AT)
(74) Vertreter: Jeck, Anton, Dipl.-Ing.
(86) Internationale Anmeldenummer: EP9100301
(87) Internationale Veröffentlichungsnummer: WO9112494

(56) Entgegenhaltungen:
- EP-A- 0 197 342
- EP-A- 0 296 632
- DE-A- 2 809 924
- FR-A- 2 415 796
- NO-C- 74 915
- US-A- 1 991 742
- US-A- 3 204 833
- US-A- 4 505 407

## Beschreibung

Die Erfindung bezieht sich auf eine Dosiervorrichtung nach dem Oberbegriff des Anspruches 1. Eine derartige Dosiervorrichtung ist aus der US-A- 3 204 833 bekannt.

Dosiervorrichtungen dieser Art sind in zahlreichen Ausführungen und für die verschiedensten Zwecke bekannt. Beispielsweise sind an Getränkeautomaten Dosiervorrichtungen zu finden, bei denen ein Behälter für ein Pulver, wie Kaffee oder Kakao, oberhalb eines quer zur Behälterachse verschiebbaren, schachtelartigen Dosierbehälters angeordnet sind (vgl. US-A 3 393 838, 3 744 865 oder 3 805 999). Die Führung eines solchen Dosierbehälters ist dabei relativ kurz, so daß er oft zum Klemmen neigt, wobei auch die quer zur Verschiebebewegung angeordneten Wände (durch Reibung der Dosierbehälterwände an ihnen) einer gewissen Beanspruchung unterworfen sind. Überdies sind solche Konstruktionen nicht universell, ohne große Nachteile, anwendbar. Besonders im Haushalt, und hier insbesondere zur Abgabe pulverförmiger Babynahrung, stellt sich das Problem der mangelnden Stabilität, die es mit sich bringt, daß der Behälter mit einer Hand festgehalten werden muß, während die andere Hand den Dosierbehälter zu ziehen versucht. Nicht nur, daß die Hausfrau bei der Arbeit nicht immer zwei Hände frei hat, wird dabei noch häufig ein Teil des Pulvers verschüttet. Gerade bei der Babyfütterung wird dies in besonderem Maße der Fall sein.

Bekannt ist für diesen letzteren Zweck auch, den Behälter in Meßbecher od. dgl. Dosierbehälter zu leeren, wobei im wesentlichen dieselben Nachteile gegeben sind.

Schließlich ist es auch schon bekannt geworden, zellenradähnliche Dosierbehälter vorzusehen, bei denen zwar die Führung in ihrem Zylindergehäuse verbessert und die Gefahr des Verschüttens im allgemeinen vermieden ist, bei denen aber doch auch, wenigstens im Haushalt, das Problem der zweihändigen Bedienung auftritt, da eine Hand den Behälter festhalten muß, während die andere Hand an einer entsprechenden Bedienungshandhabe, wie Drehknopf, Knebel od. dgl., dreht.

Der vorliegenden Erfindung liegt die Aufgabe zugrunde, eine zuverlässige und leicht bedienbare Dosiervorrichtung der eingangs genannten Art zu schaffen. Erfindungsgemäß gelingt dies durch die kennzeichnenden Merkmale des Anspruches 1.

Dadurch, daß die Betätigung in Richtung der Behälterachse erfolgt, kann der letztere leicht gegen einen Gegenstand, wie eine Tischplatte oder das die flüssigen Bestandteile bereits enthaltende Gefäß abgestützt und die Betätigungshandhabe mit einer Hand ergriffen werden, oder umgekehrt. In jedem Falle wird durch die Betätigungsbewegung der Behälter eher stabilisiert, wobei es zustäzlich auch leicht ist, eine gute und einwandfrei gleitende Führung für den Dosierbehälter vorzusehen, so daß dieser leicht aus-einer Stellung in die andere gelangen kann.

Aus den obigen Erläuterungen ist ersichtlich, daß die erfindungsgemäße Dosiervorrichtung für alle möglichen Anwendungsgebiete, wie z. B. für Getränkeautomaten, geeignet ist.

Weitere Einzelheiten der Erfindung ergeben sich anhand der nachfolgenden Beschreibung des in der Zeichnung schematisch dargestellten Ausführungsbeispiels. Es zeigt:

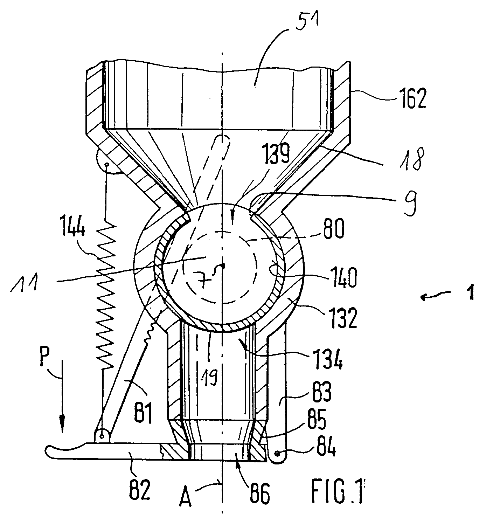

- Fig. 1: einen Längsschnitt durch den unteren Teil eines Behälters mit jeweils einer Ausführungsform einer Dosiervorrichtung.

Die Betätigungseinrichtung (81-85,144) ist nicht Teil der beanspruchten Erfindung. Dabei ist der Drehschieber 140 unter einem Behälter 162 in einem Schiebergehäuse 132 drehbar gelagert. Der Drehschieber 140 wird gerade um 180° verdreht, wobei sich im Zuge dieser Drehung die Behälteröffnung 139 verschließt, jedoch die Abgabeöffnung 134 öffnet.

Die Fig. 1 läßt ferner erkennen, daß der Dosierraum zylinderförmig ausgebildet ist, sich quer zur Behälterachse A erstreckt und radialseitig mit der Behälteröffnung 139 bzw. der gegenüberliegenden Abgabeöffnung 134 verbindbar ist und daß im Dosierraum der zylinderförmige Drehschieber mit einer radialseitigen Öffnung gelagert ist. Der Drehschieber 140 ist zwischen zwei Betriebslagen verschwenkbar, wobei er in der ersten Betriebslage mit der Behälteröffnung und in der zweiten Betriebslage mit der Abgabeöffnung kummuniziert. Der Drehschieber ist radialseitig komplementär zum Dosierraum ausgebildet.

Der Dosierraum besitzt eine axiale Öffnung, die auf den Außendurchmesser des Drehschiebers abgestimmt ist und durch die der Drehschieber in den Dosierraum einbringbar ist. Der Drehschieber ist hierbei um eine ortsfeste Achse verschwenkbar.

In einer nicht dargestellten Ausführung dieser Vorrichtung besitzt der Drehschieber zwei entgegengerichtete, parallel zu seiner Drehachse verlaufende und seitlich versetzte zylinderförmige Zapfen, die aus dem Dosierraum nach außen ragen. Diese Zapfen sind in Steuerkurven der Betätigungseinrichtung geführt, wenn die Betätigungseinrichtung lineare Hin-und Herbewegungen in Richtung der Behälterachse A ausübt. Die Steuerkurven sind in den gegenüberliegenden Innenwänden der hohlkörperartigen Betätigungseinrichtung ausgebildet.

Die Länge der Steuerkurven entspricht dem Weg, den der jeweilige Zapfen hinterlegt, wenn der Drehschieber von seiner einen Betriebslage in seine andere bewegt wird. Die Kurven sind auf den Bewegungsablauf der Zapfen abgestimmt.

## Patentansprüche

1. Dosiervorrichtung an einem Schüttgutbehälter (16.2) für körniges oder pulvriges Gut, welch letzterer einen durch einen Behälterboden (18) abgeschlossenen Behälterraum (51) entlang einer Behälterachse (A) aufweist, aus dem Schüttgut über eine abwärts, zu einer Auslaßöffnung (139) führende Schrägfläche des Behälterbodens (18) in einen darunterliegenden zylinderförmigen Dosierraum (11), in dem ein hohlzylinderförmiger Drehschieber (140) mit einer von der Behälterachse (A) durchquerten Öffnung (9) gelagert und um eine ortsfeste Achse (7) verschwenkbar ist, mit der Dosiermenge an Schüttgut entsprechendem Volumen abgebbar ist, wobei der Dosierraum (11) eine ihn durchquerende, in Richtung der Behälterachse (A) sich erstreckende und mit der Behälteröffnung (139) bzw. der gegenüberliegenden Abgabeöffnung (134) verbindbare Öffnung aufweist, mit einer Schiebereinrichtung zur Erzeugung einer Relativverschiebung zwischen die Auslaßöffnung (139) verschließenden bzw. frei gebenden Wandungsteilen mit Hilfe einer Betätigungseinrichtung, und zwar aus einer Beladestellung, in der der Behälterraum (51) und der Dosierraum (11) über die Auslaßöffnung (139) miteinander verbunden sind, in eine Entleerstellung, in der die Verbindung zwischen Dosierraum (11) und Behälterraum (51) unterbrochen ist, dagegen der Dosierraum (11) mit einer Abgabeöffnung (34) in Verbindung steht,
dadurch gekennzeichnet,
daß der Drehschieber (140) zwei entgegengesetztgerichtete, parallel zu seiner Drehachse (7) verlaufende und seitlich zu dieser versetzt angeordnete zylinderförmige Zapfen besitzt, die aus dem Dosierraum (11) nach außen ragen,
daß diese Zapfen während der linearen Hin- und Herbewegungen der Betätigungseinrichtung in entsprechenden Steuerkurven der Betätigungseinrichtung geführt sind,
daß die Länge der Steuerkurven dem Weg entspricht, den der jeweilige Zapfen hinterlegt, wenn der Drehschieber (140) von seiner Betriebslage in seine andere bewegt wird,
daß die Betätigungseinrichtung hohlkörperartig geformt ist und
daß die Steuerkurven in den gegenüberliegenden Innenwänden der Betätigungseinrichtung ausgebildet und auf den Bewegungsablauf der Zapfen abgestimmt sind.

2. Dosiervorrichtung nach Anspruch 1, dadurch gekennzeichnet, daß der Drehschieber (140) komplementär zum Dosierraum (11) ausgebildet ist.

3. Dosiervorrichtung nach einem der Ansprüche 1 oder 2, dadurch gekennzeichnet, daß der Dosierraum (11) eine in Richtung der Achse (7) weisende Öffnung zur Aufnahme des Drehschiebers (140) besitzt, die auf den Außendurchmesser des Drehschiebers (140) abgestimmt ist.

4. Verwendung einer Dosiervorrichtung nach einem der Ansprüche 1 bis 3, für einen Haushaltsbehälter.

## Claims

1. Metering device on a bulk material container (162) for granular or pulverulent material, which container has a container chamber (51) along a container axis (A), said chamber being terminated by a container base (18) and from which chamber bulk material is dischargeable via an inclined face of the container base (18) extending downwardly to an outlet aperture (139), into a cylindrical metering chamber (11) situated therebeneath, a hollow-cylindrical rotary slide member (140) being mounted in said metering chamber and being provided with an aperture (9), which is traversed by the container axis (A), and said slide member is pivotable about a fixed axis (7), and has a volume corresponding to the quantity of bulk material to be metered, the metering chamber (11) having an opening which tranverses said chamber and extends in the direction of the container axis (A), said opening being able to communicate with the container aperture (139) or respectively with the oppositely situated discharge aperture (134), said metering device having a slider arrangement for producing a relative displacement between wall portions, which close or open the outlet aperture (139), by means of an actuating arrangement, namely a displacement from a loading position, in which the container chamber (51) and the metering chamber (11) are interconnected via the outlet aperture (139), into an emptying position, in which the communication between metering chamber (11) and container chamber (51) is interrupted, yet the metering chamber (11) communicates with a discharge aperture (134), characterised in that the rotary slide member (140) has two oppositely orientated, cylindrical pins which extend parallel to its axis of rotation (7) and are disposed laterally offset from said axis, said pins protruding outwardly from the metering chamber (11), in that these pins are guided in corresponding cams of the actuating arrangement during the linear reciprocating movements of the actuating arrangement, in that the length of the cams corresponds to the path which the respective pin covers when the rotary slide member (140) is moved from its operative position into its other position, in that the actuating arrangement is configured in the form of a hollow body, and in that the cams are provided in the oppositely situated internal walls of the actuating arrangement and are adapted to the course of movement of the pins.

2. Metering device according to claim 1, characterised in that the rotary slide member (140) is complementary to the metering chamber (11).

3. Metering device according to one of claims 1 or 2, characterised in that the metering chamber (11) has an opening for receiving the rotary slide member (140), which opening points in the direction of the axis (7) and is adapted to the external diameter of the rotary slide member (140).

4. Use of a metering device according to one of claims 1 to 3, for a domestic container.

## Revendications

1. Dispositif de dosage placé sur un réservoir de matière en vrac (162) pour des produits en grains ou en poudre, réservoir qui présente une enceinte (51) fermée par un fond (18) le long d'un axe (A) de réservoir, réservoir d'où la matière en vrac peut s'écouler le long d'une surface inclinée du fond (18) du réservoir vers une chambre de dosage cylindrique (11) sous-jacente, chambre de dosage dans laquelle est monté à rotation autour d'un axe fixe (7) un tiroir rotatif (140) en forme de cylindre creux présentant une ouverture (9) que traverse l'axe (A) du réservoir, ce tiroir permettant de débiter une quantité dosée de matière en vrac, la chambre de dosage (11) transversale orientée en direction de l'axe (A) du réservoir pouvant être mise en communication avec l'ouverture (139) du réservoir ou avec l'ouverture de distribution (134) opposée, avec un dispositif à tiroir pour produire une rotation relative d'éléments de paroi qui soit obturent, soit libèrent l'ouverture d'évacuation, au moyen d'un dispositif d'actionnement, le tiroir pouvant occuper une position de remplissage, dans laquelle l'enceinte (51) du réservoir et la chambre de dosage (11) sont en communication par l'intermédiaire de l'ouverture d'évacuation (139), et une position de distribution, dans laquelle la communication entre la chambre de dosage (11) et l'enceinte (51) du réservoir est coupée, tandis qu'en revanche la chambre de dosage (11) est en communication avec une ouverture de distribution (134),
caractérisé
en ce que le tiroir présente deux tenons de forme cylindrique orientés en sens opposé parallèlement à l'axe de rotation (7) du tiroir et décalés latéralement par rapport à cet axe, tenons qui émergent vers l'extérieur de la chambre de dosage (11),
en ce que pendant que pendant la course linéaire de va-et-vient du dispositif d'actionnement, ces tenons sont guidés dans des cames de guidage adéquates du dispositif d'actionnement,
en ce que la longueur des cames de commande correspond au trajet que parcourt le tenon intéressé lorsque le tiroir rotatif (140) est déplacé d'une de ses positions de service vers l'autre,
en ce que le dispositif d'actionnement est en forme de corps creux,
en ce que les cames de commande sont formées dans les parois intérieures diamétralement opposées du dispositif d'actionnement et sont harmonisées avec la trajectoire des tenons.

2. Dispositif de dosage suivant la revendication 1, caractérisé en ce que le tiroir rotatif (140) est de forme complémentaire à celle de la chambre de dosage (11).

3. Dispositif de dosage suivant la revendication 1 ou la revendication 2, caractérisé en ce que la chambre de dosage (11) présente une ouverture orientée en direction de l'axe (7) pour la réception du tiroir rotatif (140), ouverture qui est harmonisée avec le diamètre extérieur du tiroir rotatif (140).

4. Utilisation dans un réservoir d'appareil ménager d'un dispositif de dosage suivant l'une quelconque des revendications de 1 à 3.
